# FASCICULE DE BREVET EUROPEEN

(11) **EP 0 753 861 B1**
(45) Date de publication et mention de la délivrance du brevet: **19.01.2000**
(21) Numéro de dépôt: 96401519.2
(22) Date de dépôt: 10.07.1996
(51) Int. Cl.: G21C 7/14

(54) **Dispositif de désaccouplement automatique d'une tige de commande et d'un ensemble absorbant de réacteur nucléaire**
Vorrichtung zum selbsttätigen Entkoppeln eines Antriebstabs und einer Absorberanordnung eines Kernreaktors
Arrangement for automatically decoupling a drive rod and an absorber assembly of a nuclear reactor

(30) Priorité: 12.07.1995 FR 9508438
(43) Date de publication de la demande: 15.01.1997
(73) Titulaire: COMMISSARIAT A L'ENERGIE ATOMIQUE, 75015 Paris Cédex 15 (FR)
(72) Inventeur: Bergamaschi, Yves, 13090 Aix en Provence (FR)
(74) Mandataire: Dubois-Chabert, Guy

(56) Documents cités:
- EP-A- 0 188 163
- DE-A- 4 212 284
- FR-A- 2 261 595
- US-A- 4 713 210
- PATENT ABSTRACTS OF JAPAN vol. 017, no. 654 (P-1653), 3 Décembre 1993 & JP-A-05 215883 (TOSHIBA CORP), 27 Août 1993,
- PATENT ABSTRACTS OF JAPAN vol. 018, no. 627 (P-1834), 29 Novembre 1994 & JP-A-06 242277 (TOSHIBA CORP), 2 Septembre 1994,
- PATENT ABSTRACTS OF JAPAN vol. 017, no. 153 (P-1510), 25 Mars 1993 & JP-A-04 320994 (MITSUBISHI ATOM POWER IND INC), 11 Novembre 1992,

## Description

### Domaine de l'invention

La présente invention a pour objet un dispositif de désaccouplement entre un ensemble absorbant les neutrons dans le coeur d'un réacteur nucléaire pressurisé et une tige de commande de cet ensemble, le désaccouplement se produisant automatiquement durant la phase conduisant le réacteur à son état d'arrêt à froid.

L'invention trouve une application particulièrement importante dans les réacteurs à eau sous pression, en permettant de réduire la durée des opérations de rechargement du coeur ou les opérations similaires et les doses d'exposition du personnel aux radiations à cette occasion.

### Art antérieur et problèmes posés

Pour la commande des réacteurs à eau sous pression, on utilise actuellement des ensembles de crayons ayant un pouvoir absorbant vis-à-vis des neutrons que l'on déplace verticalement dans le coeur du réacteur, entre les éléments combustibles, dont le regroupement d'un certain nombre est appelé "assemblage combustible", de façon à régler la réactivité de ce coeur et donc la puissance fournie par le réacteur. Ces ensembles sont appelés "ensembles absorbants" dans la présente demande.

Le déplacement de chacun des ensembles absorbants accrochés respectivement à une tige de commande est obtenu au moyen de mécanismes de déplacement, par exemple du type à vis-écrou, coopérant avec la tige de commande, placés à l'intérieur d'enceintes étanches tubulaires en communication avec la cuve du réacteur et disposés verticalement au-dessus du couvercle de fermeture de la cuve du réacteur.

La tige de commande se termine en partie basse par des moyens de liaison qui s'engagent dans un pommeau de préhension de l'ensemble absorbant et qui sont déverrouillables manuellement à distance à l'aide d'un outil spécial, une fois que le couvercle de fermeture de la cuve est retiré.

Le fonctionnement d'un réacteur nucléaire nécessite le remplacement périodique des assemblages combustibles du coeur.

Une telle opération exige le retrait du couvercle de fermeture de la cuve, conjointement avec les mécanismes d'entraînement des tiges de commande portées par celui-ci. Après le retrait du couvercle de cuve, les tiges de commande sont désaccouplées manuellement, une à une, de leurs ensembles absorbants respectifs à l'aide de l'outil spécial. Les équipements internes du réacteur disposés au-dessus du coeur sont ensuite enlevés en même temps que l'ensemble des tiges de commande, les tiges étant soulevées par les équipements internes.

Les assemblages combustibles sont alors découverts et peuvent être retirés du coeur du réacteur. Bien entendu, le réacteur est arrêté durant les opérations de rechargement du coeur et le maintien dans cet état, que l'on désignera par l'expression "état d'arrêt à froid", nécessite que les ensembles absorbants restent complètement introduits dans les assemblages combustibles pour satisfaire aux normes de sécurité.

La manoeuvre manuelle de chacune des liaisons, pour désaccoupler la tige de commande de son ensemble absorbant associé, nécessite un temps relativement long. Ainsi, la durée totale des opérations de désaccouplement manuel est relativement longue et pendant ce temps le personnel est exposé à des radiations.

On connaît par le brevet FR-A 2 261 595 un dispositif de liaison entre une barre ou tige de commande et son ensemble absorbant associé. Ce dispositif permet le désaccouplement avant l'enlèvement du couvercle de fermeture de la cuve en se servant du mécanisme de déplacement de la tige. Le désaccouplement et le réaccouplement sont réalisés en abaissant puis en relevant la tige de commande alors que l'ensemble absorbant est complètement inséré dans l'assemblage combustible.

Un tel dispositif a pour avantage d'éviter le désaccouplement manuel des liaisons après l'ouverture de la cuve et donc de réduire la durée des opérations de rechargement du coeur et de diminuer la dose d'exposition du personnel aux radiations.

Toutefois, on peut regretter que les moyens d'accouplement du bas de tige de commande restent engagés dans l'organe de préhension de l'ensemble absorbant lorsqu'ils sont en position de repos. En effet, on peut craindre l'élévation accidentelle d'un ou de plusieurs ensembles absorbants lors de l'évacuation des équipements internes couvrant le coeur, si ces équipements soulèvent de façon classique les tiges de commande. Ceci, consécutivement, par exemple, à un défaut d'alignement entre le bas des tiges de commande et l'organe de préhension de leur ensemble absorbant associé, produisant un accrochage entre ces éléments. Un tel événement peut produire un accroissement de la réactivité du coeur pouvant être totalement incompatible avec les critères de sécurité qui prévoient le maintien des ensembles absorbants dans les assemblages combustibles lorsque la cuve du réacteur est ouverte.

De plus, on déplore l'absence d'un système prévu pour défaire la liaison entre la tige de commande et l'ensemble absorbant en cas d'enraiement du dispositif, alors que les moyens d'accouplement sont en position de travail.

D'autre part, par la demande de brevet allemand DE-A-42 12284, on connaît un dispositif de commande thermique assurant automatiquement le désaccouplement d'une tige de commande de son ensemble absorbant associé et la propulsion dans le coeur de cet ensemble en cas de montée en température anormale à l'intérieur du réacteur.

Ce dispositif comporte des moyens d'accouplement, du type à billes, maintenus en position de travail par un verrou raccordé à un module d'expansion thermique constitué d'un ou de plusieurs soufflets métalliques et de réservoirs annexes communiquant entre eux et emplis de fluide primaire. L'accroissement de longueur des soufflets sous l'effet de la dilatation du fluide emprisonné dans le module d'expansion déplace le verrou de façon, tout d'abord, à autoriser le désaccouplement, puis à repousser l'ensemble absorbant.

Or, un tel dispositif, qui a pour avantage de ne nécessiter aucune manipulation externe, n'assure que le désaccouplement et la propulsion dans le coeur de l'ensemble absorbant. La position du verrou qui conditionne la mise au repos ou au travail des moyens d'accouplement est directement dépendante de la température du réacteur, en fait de la température du module d'expansion.

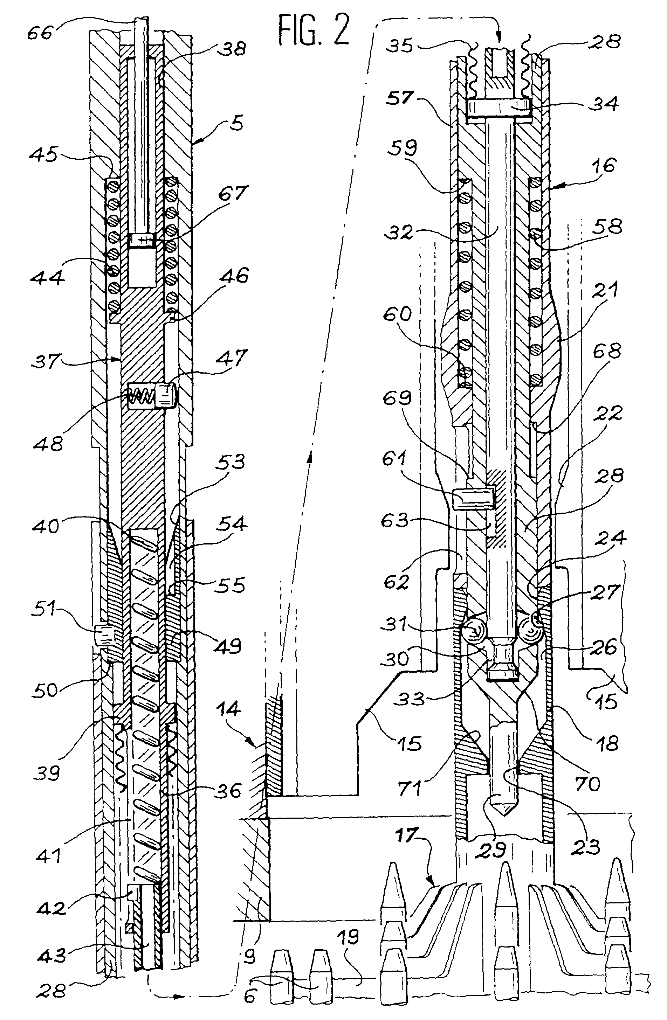

Le brevet US-A-4 713 210, d'autre part, décrit un élément d'actionnement d'une barre de contrôle et un système d'attache. On y évoque l'utilisation d'éléments thermiques pour jouer un rôle dans le décrochage ou l'accrochage d'une barre de contrôle, et en particulier la différence de coefficient thermique entre deux pièces en matières différentes. En effet, comme le montre la figure 2F, la tige T peut s'allonger beaucoup plus que le cylindre C provoquant ainsi l'ouverture de l'attache et la libération de la barre de commande du réacteur.

### Objectifs de l'invention

Le but de l'invention est d'équiper la liaison entre la tige de commande et son ensemble absorbant associé d'un dispositif permettant de séparer automatiquement la tige de l'ensemble absorbant lors de l'amenée du réacteur dans l'état d'arrêt à froid avant l'enlèvement du couvercle de fermeture de la cuve afin de supprimer, sans aucune intervention extérieure venant en substitution et sans rencontrer les difficultés posées par l'invention décrite dans le document FR-A-2 261 595, la manoeuvre manuelle classique des joints et conséquemment de réduire la durée des opérations réalisées alors que la cuve est ouverte et de diminuer les doses d'exposition aux rayonnements du personnel.

Le but de l'invention est également de doter cette même liaison, entre la tige de commande et son ensemble absorbant, d'un dispositif de séparation automatique qui soit neutralisable contrairement à celui faisant l'objet de la demande DE-A-42 12 284. La neutralisation de la séparation automatique permet, d'une part, d'éviter un désaccouplement inutile si le réacteur est amené dans l'état d'arrêt à froid pour une raison autre qu'une ouverture de la cuve et, d'autre part, de pouvoir réaccoupler, par exemple, comme dans l'art antérieur durant l'arrêt à froid avant la fermeture de la cuve et la montée en puissance du réacteur.

### Résumé de l'invention

A cet effet, l'objet principal de l'invention est un dispositif de désaccouplement automatique entre le pommeau d'un ensemble absorbant destiné à être introduit entre les crayons d'un assemblage combustible du coeur d'un réacteur nucléaire à eau pressurisée, et une tige de commande transmettant à l'ensemble absorbant des mouvements induits par un mécanisme de commande logé dans une enceinte étanche placée au-dessus du couvercle de fermeture de la cuve du réacteur, ce dispositif de désaccouplement comprenant une tête d'accrochage et une tringle de verrouillage mobile, apte à occuper un état verrouillé et un état déverrouillé, dont un déplacement axial entraîne un changement d'état, caractérisé par le fait qu'il comprend de plus un module thermique se déformant axialement sous l'effet de la température, et qui est disposé entre la tête d'accrochage et la tringle de verrouillage pour former un ensemble mobile dans le sens axial. Le module thermique comprend un soufflet étanche rempli d'eau. La tête d'accrochage comprend au moins un objet d'accrochage radial faisant saillie grâce à un petit ressort et coulissant à l'intérieur d'un cylindre emboîté dans la gaine de la tige de commande, ce cylindre présentant en partie interne et de haut en bas, pour recevoir le doigt d'accrochage, un évasement chanfreiné et une rainure axiale, ayant une section en forme de "U", usinée sur une partie de sa hauteur. Au-dessus de la tête d'accrochage est disposé un deuxième ressort qui tend à la pousser en permanence vers le bas.

La tringle de verrouillage est une tringle cylindrique coulissante montée coaxialement dans la gaine de la tige de commande, cette tringle de verrouillage comportant une gorge de verrouillage annulaire apte à être située en face de billes, logées dans la gaine de la tige de commande, lorsque la tringle de verrouillage est dans une position haute. Les billes sont reçues dans des évidements radiaux, de forme tronconique, ménagés au bas de la gaine dont l'épaisseur est inférieure au diamètre des billes, ces évidements étant conformés pour empêcher un échappement des billes radialement vers l'extérieur pour que se produise le désaccouplement automatique de l'ensemble absorbant en cas de baisse de la température de l'eau de la cuve du réacteur en dessous d'une première température déterminée, le doigt d'accrochage (47) venant alors en butée dans la rainure axiale et la tringle de verrouillage remontant sous l'effet du raccourcissement du soufflet, suite à la contraction de l'eau jusqu'à la position haute qui permet l'effacement radial des billes dans la gorge annulaire de la tringle de verrouillage.

Il comprend un tube extracteur monté coulissant sur l'extrémité inférieure de la gaine et repoussé vers le bas par un troisième ressort suffisamment raide pour soulever la tige de commande, le tube extracteur présentant à sa partie supérieure une fente ayant une partie axiale suivie d'une partie hélicoïdale et qui, en coulissant sur un pion de guidage solidaire du cylindre guide le déplacement du cylindre.

Le réaccouplement de la tige de commande avec le pommeau de l'ensemble absorbant se produit lorsqu'une poussée est exercée sur le haut de la tige de commande, cette dernière se déplaçant d'abord vers le bas d'une hauteur égale à la partie axiale de la fente du tube extracteur, puis, sous l'action de la partie hélicoïdale de la fente sur le pion de guidage faisant tourner le cylindre d'une fraction de tour dégageant le doigt d'accrochage de la rainure en U, permettant ainsi un déplacement vers le bas de l'ensemble de la tête d'accrochage du module thermique de la tringle de verrouillage.

Au niveau du pion de guidage, la gaine de la tige de commande comporte une fente horizontale autorisant la rotation d'une fraction de tour du cylindre, par rapport à la tige de commande, permettant ainsi le dégagement du doigt d'accrochage de la rainure interne en U et, en conséquence, le libre déplacement de la tête d'accrochage vers le bas.

Le désaccouplement automatique de l'ensemble absorbant avec la tige de commande, piloté par le dispositif selon l'invention, se produit en cas de baisse de la température de l'eau de la cuve du réacteur en-dessous d'un certain seuil (par exemple environ 80°C). Le doigt d'accrochage vient alors en butée dans l'encoche axiale en U et la tringle de verrouillage remonte sous l'effet du raccourcissement du soufflet, à la suite de la contraction de l'eau, jusqu'à la position haute qui permet l'effacement radial des billes dans la gorge annulaire de la tringle de verrouillage.

Dans cette position désaccouplée, lorsqu'une poussée est exercée par le haut sur la tige de commande, celle-ci se déplace d'abord vers le bas d'une hauteur égale à celle de la partie axiale de la fente du cylindre puis, sous l'action de la partie hélicoïdale de la fente sur le pion de guidage, fait tourner le cylindre d'une fraction de tour en dégageant le doigt d'accrochage de la rainure en U, permettant ainsi un déplacement vers le bas de l'ensemble : tête d'accrochage-module thermique-tringle de verrouillage, et en conséquence le réaccouplement de la tige de commande avec le pommeau de l'ensemble absorbant.

Dans une variante de réalisation, on peut compléter le dispositif par un module barométrique disposé en-dessous de l'extrémité inférieure de la tringle de verrouillage qui est alors séparée en deux tronçons reliés entre eux par un quatrième ressort dont le débattement est limité par un système pion de guidage et d'arrêt-fente axiale, ce module barométrique, maintenu en dépression, se déformant axialement en fonction des variations de pression régnant dans la cuve du réacteur en provoquant un changement d'état de la tringle de verrouillage.

Le module barométrique est constitué de préférence d'une embase inférieure surmontée d'une douille axiale, d'une capsule supérieure coiffant la douille axiale, d'un soufflet métallique reliant de façon étanche la douille et la capsule et d'un cinquième ressort placé à l'intérieur de la douille.

Dans cette variante de réalisation, le désaccouplement automatique est obtenu, d'une part, lorsque la pression à l'intérieur de la cuve du réacteur est suffisamment réduite et, d'autre part, lorsque la température à l'intérieur de la cuve est suffisamment abaissée.

### Liste des figures

L'invention et ses différentes caractéristiques techniques seront mieux comprises à la lecture des figures qui sont respectivement :
- figure 1, une vue en coupe de la partie supérieure de la cuve d'un réacteur où est installée l'invention ;
- figure 2, une vue en coupe du dispositif selon l'invention en deux parties ;
- figure 3, une vue frontale partielle de la rainure permettant la rotation du cylindre pour escamoter la butée dans le dispositif selon l'invention ;
- figure 3A, une coupe horizontale selon la ligne A-A de la figure 3 ;
- figure 3B, une coupe horizontale selon la B-B de la figure 3 ;
- figure 4, en coupe, la partie inférieure du dispositif selon l'invention ;
- figures 5A à 5D, quatre vues en coupe simplifiées du dispositif selon l'invention, durant quatre phases de fonctionnement ;
- figure 6, une coupe frontale d'une variante du dispositif selon l'invention.

### Description détaillée d'une réalisation de l'invention

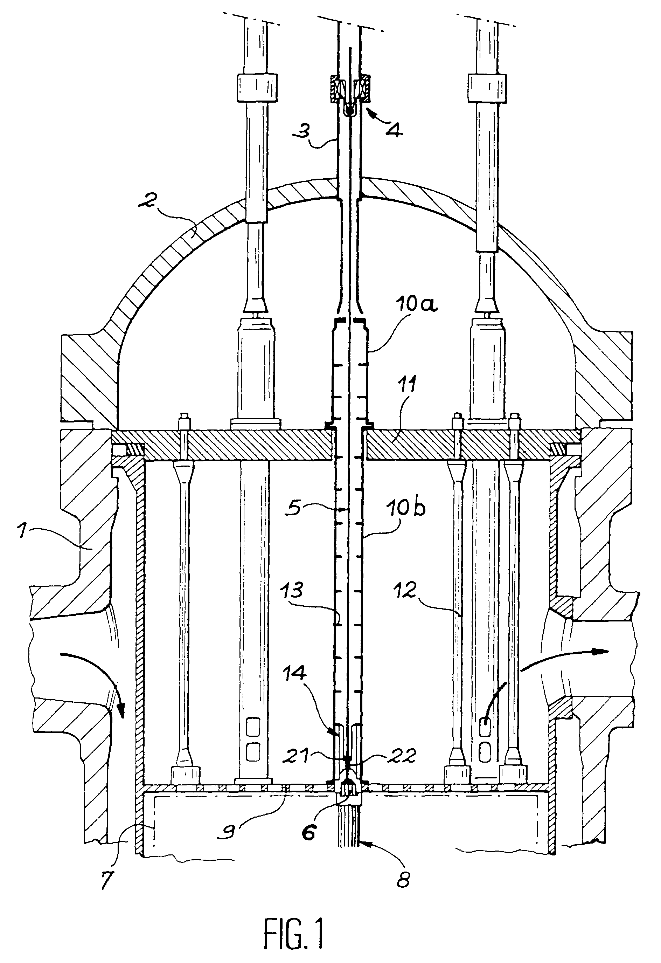

La figure 1 représente, en vue frontale, la cuve 1 d'un réacteur nucléaire à eau sous pression, fermée à sa partie supérieure par un couvercle 2 de forme hémisphérique supportant des enceintes étanches 3. A l'intérieur de chacune de ces enceintes étanches 3 est disposé un mécanisme 4 permettant le déplacement d'une tige de commande 5 d'un ensemble de crayons absorbants 6. Ce mécanisme est de préférence du type à vis-écrou avec écrou séparable. L'ensemble de crayons absorbants 6 est placé à la partie inférieure de cette tige de commande 5, de manière à être suspendu. Ces crayons ont un pouvoir absorbant vis-à-vis des neutrons. Cet ensemble est souvent appelé "grappe absorbante".

Le coeur du réacteur 7 est constitué d'un ensemble d'assemblages combustibles 8 juxtaposés. La limite supérieure du coeur 7, juste au-dessus de ces assemblages combustibles 8, est définie par une plaque de coeur 9. Le réglage de la réactivité du coeur 7 est donc assuré en introduisant plus ou moins profondément les grappes absorbantes ou ensembles de crayons 6, dans certains des assemblages combustibles 8 du coeur 7.

Au-dessus du coeur 7, les grappes absorbantes 6 coulissent à l'intérieur de boîtiers appelés "guides de grappe" constitués de deux éléments superposés 10a et 10b, suspendus verticalement à une plaque support supérieure 11 accrochée elle-même à la cuve et reliée à la plaque de coeur 9 par des colonnes de fixation 12. Ces équipements situés au-dessus du coeur forment un ensemble rigide nommé "équipements internes supérieurs".

Des plaques transversales perforées 13 sont placées à différents niveaux à l'intérieur des guides de grappe 10b et assurent un guidage discontinu des différents éléments de la grappe.

Un autre élément de guidage continu 14 est installé en partie basse de l'élément inférieur de guide de grappe 10b, dans une zone où l'eau sort radialement du guide de grappe en direction des tubulures de sortie de la cuve.

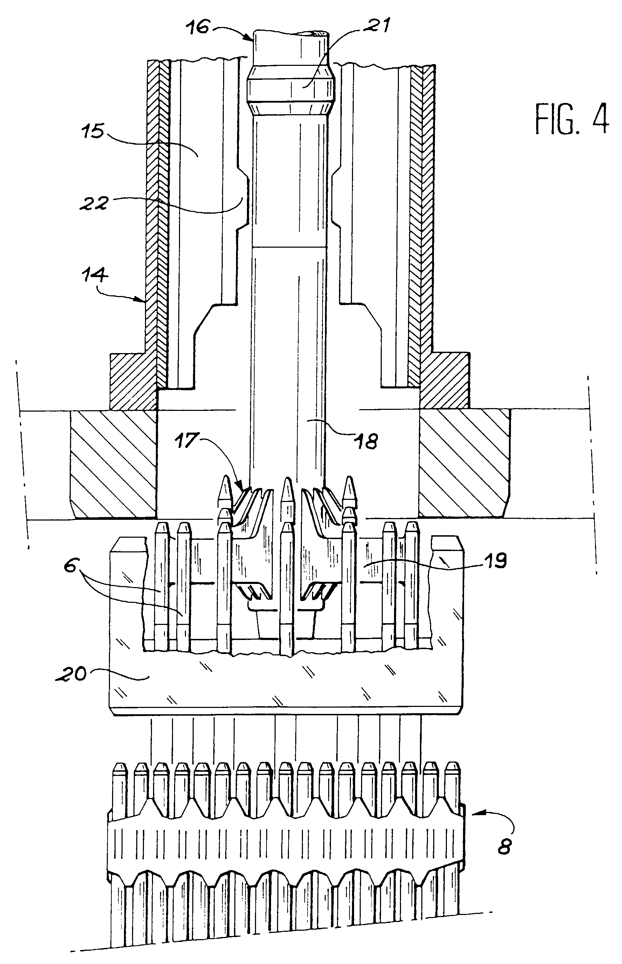

Sur la partie droite de la figure 2, et en particulier sur la figure 4, représentant la partie inférieure du dispositif 16 selon l'invention, on peut distinguer à plus grande échelle, l'élément de guidage continu 14 constitué de fourreaux fendus 15 placés verticalement. Ce dispositif 16 relie la tige de commande 5 a une pièce de fixation 17 des crayons absorbants 6. La fixation est constituée d'un pommeau 18 d'assemblage à la tige de commande 5, muni de bras radiaux 19 de supports des crayons.

Les opérations de rechargement du coeur, ou les opérations similaires, sont effectuées en eau, après démontage du couvercle de fermeture de la cuve. Pendant ces opérations, la température à l'intérieur de la cuve doit être maintenue en dessous d'une certaine température, par exemple 60°C, et les grappes absorbantes 6 doivent rester complétement insérées à l'intérieur des assemblages combustibles 8 non représentés sur cette figure 2, leur pommeau 18 reposant sur l'embout supérieur 20 de l'assemblage combustibles 8.

Un outillage spécial de manoeuvre du dispositif selon l'invention peut être arrimé à l'extrémité supérieure de la tige de commande 5, une fois que le couvercle de cuve est enlevé.

L'ensemble des tiges de commande 5 est enlevé en soulevant les équipements internes supérieurs, une fois que les tiges de commande 5 sont désaccouplées et désengagées hors du pommeau 18 de la grappe absorbante associée. Lors de cette opération d'évacuation, les tiges de commande 5 sont soulevées par les équipements internes supérieurs, par l'intermédiaire d'un épaulement 21 qu'elles comportent en partie basse et qui est entraîné par des dents d'accrochage 22 prévues sur les fourreaux 15 du guidage continu.

Le pommeau 18 de la grappe absorbante 6 comporte un perçage 23 et un évidement cylindrique 24 pour recevoir l'extrémité inférieure de la tige de commande 5. Une chambre de verrouillage cylindrique 26 est usinée à l'intérieur de l'évidement 24. La chambre de verrouillage 26 est raccordée en partie haute à l'évidement 24 par un rétrécissement conique 27.

La tige de commande 5 est constituée par une gaine cylindrique 28, rétrécie dans sa partie basse sur une certaine hauteur, puis se terminant par un arbre plein 29 pénétrant dans le perçage 23.

La gaine 28 de la tige de commande 5 comporte en partie basse de ce rétrécissement, à une même côte axiale, une série d'évidements radiaux 30 de forme tronconique et dont la base débouche à l'intérieur de la gaine 28. A l'intérieur de chacun de ces évidements radiaux 30 est placée une bille 31, dont le diamètre est supérieur à l'épaisseur de gaine 28. Chaque bille 31 est mobile à l'intérieur de son évidement radial 30. La chambre de verrouillage 26 permet un dégagement de ces billes 31 vers l'extérieur de la tige de commande 5. La partie rétrécie de chacun des évidements radiaux 30 interdit un décalage complet de chaque bille 31 dans ce sens.

Une tringle de verrouillage 32 est installée en partie basse de la tige de commande 5. Cette tringle de verrouillage 32 est centrale et coaxiale par rapport à la tige de commande 5 et déplaçable suivant son axe longitudinal et vertical. Une gorge de verrouillage annulaire 33 est usinée dans le bas de la tringle de verrouillage 32 qui monte au-delà du rétrécissement de la gaine 28 de la tige de commande 5 et comporte, au-dessus de ce rétrécissement, un piston 34 raccordé de façon étanche à l'extrémité inférieure d'un soufflet métallique 35, déformable suivant l'axe de la tige de commande 5.

Selon une caractéristique principale de l'invention, le haut de la tringle de verrouillage 32 est engagé à l'intérieur d'un tube interne 36 se terminant en partie haute par une tête d'accrochage 37 surmontée d'un étrier 38. Le tube 36 comporte un évasement 39, raccordé de façon étanche à l'extrémité supérieure du soufflet 35. Un premier ressort 40 est placé à l'intérieur du tube interne 36 et a tendance à dégager la tringle de verrouillage 32 hors de ce tube interne 36.

Le tube interne 36 comporte une rainure verticale 41 recevant un pion de guidage et d'arrêt 42 fixé radialement à l'extrémité supérieure de la tringle de verrouillage 32. La rainure 41 met en communication le volume interne du tube intérieur 36 avec celui du soufflet 35. Ces deux volumes contiennent un corps incompressible, ou presque, dont le volume varie avec la température d'une façon sensible. Ces conditions étant satisfaites, ce corps doit être compatible avec les radiations sous flux neutronique et aussi, en cas de perte d'étanchéité du soufflet 35, avec l'eau du réacteur et les éléments chimiques qu'elle comporte, on peut avantageusement utiliser de l'eau déminéralisée.

La tête d'accrochage 37, le soufflet 35 et la tringle de verrouillage 32 constituent dans ce premier exemple de réalisation, un ensemble rigide coaxial pouvant coulisser à l'intérieur de la tige de commande et dont la longueur dépend donc de la température.

Un perçage 43, réalisé à l'intérieur de la tringle de verrouillage 32 et mis en communication avec l'intérieur du soufflet 35, peut également être rempli d'eau et constitué un volume additionnel permettant d'obtenir les caractéristiques de déformation souhaitées du module thermique.

Un deuxième ressort 44, intercalé entre un épaulement 45 de l'espace interne de la tige de commande 5 et une partie en saillie 46 de la tête d'accrochage 37, tend à pousser vers le bas cette dernière. La raideur de ce deuxième ressort 44 est supérieure à celle du premier ressort 40. La tête d'accrochage 37 porte un doigt 47 repoussé par un petit ressort 48. Ce doigt d'accrochage 47 est mobile transversalement pour venir en saillie dans l'espace interne de la tige de commande 5, ou en retrait partiel ou total, dans l'espace interne d'un cylindre 49.

Ce dernier prend appui sur un épaulement 50 de l'espace interne de la tige de commande 5 et peut tourner d'une fraction de tour par rapport à celle-ci. L'amplitude de la rotation est limitée par le déplacement d'un pion radial de guidage et d'arrêt 51, solidaire du cylindre 49 est en partie engagé dans une fente horizontale 52 ménagée dans l'épaisseur de la gaine 28 de la tige de commande 5, sur un secteur de circonférence de cette gaine 28.

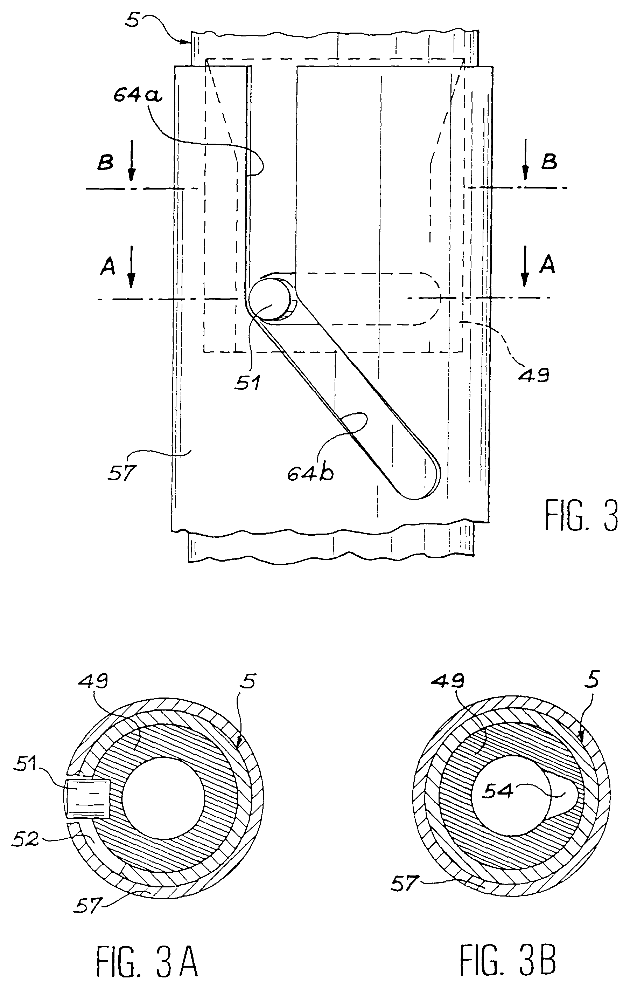

L'espace interne du cylindre 49 comporte, dans sa partie haute, un évasement 53 débouchant sur l'espace interne de la tige de commande 5. Cet espace interne du cylindre 49 comprend également une rainure axiale 54 verticale, dont la section a la forme d'un U majuscule tel qu'illustré sur la figure 3B. L'extrémité inférieure de la rainure 54 est fermée par un épaulement 55. Son extrémité supérieure débouche dans l'épaisseur du cylindre 49 au niveau de l'évasement 53 et ses bords 56 sont arrondis.

Un tube extracteur 57 est monté glissant sur le bout inférieur de la tige de commande 5 et comporte un troisième ressort interne 58, monté sur la partie rétrécie de la tige de commande 5 et intercalé entre la base d'un épaulement 59 et un épaulement interne 60 ménagé à l'intérieur du tube extracteur 57. Ce troisième ressort 58 est précontraint de façon à produire une poussée sur la tige de commande 5 au moins suffisante pour la soulever, l'extrémité inférieure du tube extracteur 57 étant posée sur le pommeau 18 de la grappe.

Un autre pion de guidage et d'arrêt 61 est fixé radialement dans la partie rétrécie de la gaine 28 de la tige de commande 5 et est saillant à l'intérieur et à l'extérieur de cette gaine 28. La partie de ce pion de guidage 61 dépassant à l'extérieur de la gaine 28 est engagée dans une fente verticale 62 ménagée dans l'épaisseur du tube extracteur 57 parallèlement à son axe. L'autre extrémité du pion de guidage et d'arrêt 61 est engagée dans une rainure verticale 63 ménagée dans la tringle de verrouillage 32 suivant l'axe de cette tringle 32.

En référence à la figure 3, le tube extracteur 57 comporte une fente 64 constituée d'une branche verticale 64a, orientée parallèlement à l'axe du tube et débouchant sur une seconde branche hélicoïdale inclinée 64b, en forme de portion d'hélicoïde. La fente 64 est engagée sur le pion radial 51 qui est solidaire du cylindre 49 et coopère avec la fente horizontale 52 de la tige de commande 5.

La figure 3A montre mieux la fente horizontale 52 pratiquée dans la gaine 28 de la tige de commande 5. On voit qu'elle permet une rotation d'amplitude déterminée par sa largeur pour le cylindre 49 et l'escamotage de la butée constituée par l'épaulement 55 fermant l'extrémité inférieure de la rainure 54.

Le dispositif se complète par une longue tige de démontage 66, disposée de façon axiale et centrale dans la tige de commande 5 et se terminant en partie inférieure par un piston 67 qui pénètre à l'intérieur de l'étrier 38 de la tête d'accrochage 37.

La tige de démontage 66 remonte jusqu'en haut de la tige de commande 5 où se situent des moyens de commande, non représentés, permettant de l'actionner verticalement et de la maintenir fixe dans une position axiale où son renflement terminal n'entrave pas les déplacements de la tête d'accrochage 37.

La tige de commande 5 comprend des moyens (non représentés) permettant d'arrêter en rotation cette tige, par exemple, par rapport au guidage continu 14 installé dans le guide de grappe inférieur 10b. Egalement, la tige de commande 5 comprend des moyens (non représentés) permettant de lier en rotation cette tige par rapport au pommeau 18 de la grappe une fois que ces éléments ont été accostés.

### Fonctionnement du dispositif

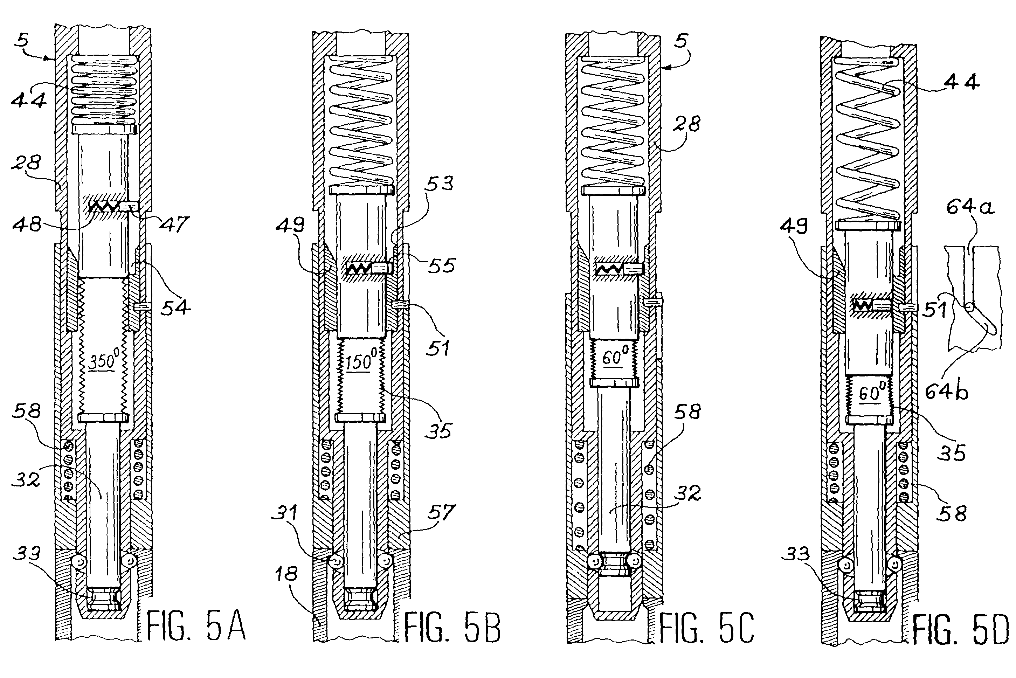

En référence aux figures 5A à 5D, le fonctionnement du dispositif décrit précédemment est maintenant expliqué. On considère le cas d'un réacteur durant différentes phases entre deux réalimentations en combustible de son coeur.

Lorsque le réacteur est en fonctionnement, c'est-à-dire à la température de 350°, par exemple pour produire de l'électricité, les constituants du dispositif prennent la position indiquée sur la figure 2. La figure 5A montre les principaux constituants du dispositif dans cette même position, ceux-ci étant représentés de façon plus schématique.

La tige de commande 5 est accouplée en translation à la grappe absorbante 6. La tringle de verrouillage 32 est en position basse et présente en face des billes 31 une partie pleine qui les maintient en position "sortie", c'est-à-dire en partie engagées dans l'épaisseur de la gaine 28 de la tige de commande 5 et dans la chambre de verrouillage 26 du pommeau 18 de la grappe absorbante 6. La tringle de verrouillage 32 est maintenue en position basse sous l'effet de la poussée du deuxième ressort 44. Son extrémité inférieure vient buter au fond du rétrécissement de la gaine 28 et de la tige de commande 5.

Les billes 31 transmettent ainsi au pommeau 18 de la grappe absorbante 6 les efforts axiaux exercés par le mécanisme référencé 4 sur la figure 1 sur la tige de commande 5.

Le troisième ressort 58 tend à écarter en permanence la tige de commande 5 du pommeau 18 de la grappe absorbante 6 en repoussant le tube extracteur 57. Il a ainsi tendance à maintenir un contact permanent entre les billes 31 et leur logement 30 et le rétrécissement conique 27 du pommeau 18. Cela permet d'éviter ou de rendre acceptable d'éventuels chocs entre les billes 31 et les parties en question. De tels chocs peuvent par exemple résulter des accélérations et décélérations verticales transmises à la tige de commande 5 par le mécanisme, lors de son fonctionnement et qui sont susceptibles de produire une détérioration des surfaces en contact.

Le doigt d'accrochage 47, qui est repoussé par le petit ressort 48, est en position de saillie en dehors de la tête d'accrochage 37 et son extrémité vient buter à l'intérieur de la gaine 28 de la tige de commande 5.

Dans cette position, une élévation ou une baisse de température au voisinage du dispositif provoque un allongement ou un raccourcissement du module thermique constitué du soufflet 35 rempli d'eau. Ces changements de longueur sont compensés par un écrasement ou une détente du deuxième ressort 44, la tringle de verrouillage 32 restant en position basse. Ils produisent une montée ou une descente de la tête d'accrochage 37, le doigt d'accrochage 47 porté par celle-ci cheminant axialement à l'intérieur de l'espace interne de la gaine 28 de la tige de commande 5.

Si la température est suffisamment abaissée, le doigt d'accrochage 47 descend à l'intérieur du cylindre 49. En début de pénétration, le chanfrein d'entrée 53 repousse le doigt d'accrochage 47 à l'intérieur de la tête d'accrochage 37, jusqu'à ce qu'il vienne dans une position radiale intermédiaire qui autorise son déplacement à l'intérieur de la rainure 54 du cylindre 49.

Lorsqu'une certaine température est atteinte, par exemple 150°C, le doigt d'accrochage 47 vient buter, comme représenté sur la figure 5B, contre l'épaulement 55 qui ferme la rainure 54 du cylindre 49.

Si la température continue à baisser, la tête d'accrochage 37 est stoppée dans sa descente et le raccourcissement du module thermique, c'est-à-dire du soufflet 35, s'accompagne d'un soulèvement de la tringle de verrouillage 32. Lorsqu'une température donnée est atteinte, la gorge 33 de la tringle de verrouillage 32 arrive à la hauteur des billes 31 et autorise le désaccouplement en permettant à ces billes 31 de sortir de la chambre de verrouillage 26 du pommeau 18, pour se mettre en position "rentrée" à l'intérieur de cette gorge 33. Cette température de désaccouplement peut par exemple être égale à 80°C, pour une température d'enlèvement du couvercle de la cuve inférieure à 60°C.

Lors du désaccouplement, les grappes 6 peuvent par exemple être suspendues aux tiges de commande 5, le bas du pommeau 18 étant situé à quelques centimètres au-dessus de l'embout supérieur 20 de l'assemblage combustible.

Dans cette position de désaccouplement, la tige de commande 5 est dégagée du pommeau 18 qui tombe sur l'embout supérieur 20 de l'assemblage combustible sous l'effet conjugué du poids de cette grappe et de la poussée du troisième ressort 58 qu'il subit par l'intermédiaire du tube extracteur 57.

Lors de la descente du pommeau 18, le tube extracteur 57 est repoussé vers le bas par le troisième ressort 58 et coulisse sur la tige de commande 5 pour venir prendre la place qui était préalablement occupée par le pommeau 18. Ceci rend impossible, de manière redondante avec le rétrécissement conique du logement 30 des billes 31, la perte de ces billes 31, une fois que celles-ci sont dégagées hors du pommeau 18. Ce mouvement du tube extracteur 57 est arrêté lorsqu'une surface radiale interne 68, usinée à l'intérieur de ce tube extracteur 57, vient au contact d'un épaulement externe 69 de la tige de commande 5.

Lorsque le dégagement de la tige de commande 5 par rapport au pommeau 18 de la grappe absorbante 6 a eu lieu, la tige de commande est posée sur le pommeau 18 à l'aide du mécanisme référencé 4 sur la figure 1. La position prise alors par les principaux constituants du dispositif et par le pommeau de la grappe est montrée d'une façon schématique sur la figure 5C.

Le tube extracteur 57 aboute le pommeau 18 de la grappe absorbante 6 qui repose sur l'embout supérieur de la grappe. Le troisième ressort 58 soulève alors la tige de commande 5 et maintient la gaine 28 et l'arbre plein 29 de la tige de commande 5 qui la termine respectivement hors de l'évidement cylindrique 24 et hors du perçage 23 du pommeau 18.

Les caractéristiques de déformation du module thermique constitué par le soufflet 35 et la géométrie de la gorge de verrouillage 26 sont telles qu'une descente de la température en deça de la température de désaccouplement n'a pas d'effet sur la position des billes 31.

Une fois que le couvercle de la cuve est enlevé, les tiges de commande 5 sont évacuées en même temps que les équipements internes supérieurs, l'épaulement 21 venant prendre appui sur les dents d'accrochage 22 du guidage continu, référencé 14 sur la figure 1, lorsque les équipements internes supérieurs sont soulevés.

On constate que la disposition de la tige de commande 5 par rapport au pommeau 18 de la grappe absorbante 6, obtenue grâce au dispositif selon l'invention, permet d'éviter le soulèvement intempestif d'une grappe, lors de l'opération de retrait des équipements internes supérieurs.

Après le rechargement du coeur, les équipements internes supérieurs sont remis en place en même temps que les tiges de commande 5 et celles-ci se retrouvent dans une position relative, par rapport à leur pommeau 18 respectif, identique à celles où elles étaient avant l'enlèvement du couvercle, puis celui des équipements internes supérieurs. Cette position est celle indiquée sur la figure 5C. L'extrémité supérieure des tiges de commande 5 dépasse, dans cette position, les éléments de guidage 10 de la grappe.

Lorsqu'il faut effectuer le réaccouplement des tiges de commande 5 avec les grappes absorbantes 6, on utilise l'outil de manoeuvre du dispositif, qu'on vient accoster en partie supérieure de chaque tige de commande 5. Pour obtenir son réaccouplement, la tige de commande 5 est descendue jusqu'à ce qu'une surface conique 70, raccordant l'extrémité inférieure de sa gaine 28 et son arbre terminal 29, vienne buter sur le rétrécissement 71 à l'entrée du perçage 23 du pommeau 18. La descente s'effectue sous l'effet du poids de l'outillage, ce qui rend non plausible l'endommagement du matériel par application d'une surcharge.

La descente de la tige de commande 5 fait cheminer le pion radial 51, lié au cylindre intérieur 49, dans la partie longitudinale 64a de la fente 64 du tube extracteur 57, puis, lorsque les billes 31 passent l'évidement 24 du pommeau 18, dans la partie hélicoïdale 64b de cette même fente. Le déplacement du pion radial 51 dans cette partie hélicoïdale 64b provoque la rotation d'une fraction de tour du cylindre 49 qui escamote l'épaulement 55 de ce cylindre et amène le doigt d'accrochage 47 en position de retrait complet à l'intérieur de la tête d'accrochage 37 à laquelle il est fixé.

Cette tête d'accrochage 37 est alors libérée et l'ensemble qu'elle forme avec le module thermique, c'est-à-dire le soufflet 35, et la tringle de verrouillage 32 descend jusqu'à ce que cette dernière arrive en position basse, sous l'effet des forces gravitaires s'exerçant sur les différents éléments et de la poussée du deuxième ressort 44 appliquée sur la tête d'accrochage 37.

La descente de la tringle de verrouillage 32 repousse les billes 31 vers l'extérieur de leur logement conique 30 de la gaine 28 et les fait sortir dans la chambre de verrouillage 26 du pommeau 18.

Lorsque l'effort sur la tige de commande 5 est relâché, celle-ci remonte sous l'effet de la poussée du troisième ressort 58, jusqu'à ce que les billes 31 viennent au contact du rétrécissement conique 27. Lors de cette remontée, le pion radial 51 chemine dans la partie hélicoïdale 64b de la fente 64 et fait tourner le cylindre 49 jusqu'à l'amener, lorsque la partie longitudinale verticale 64a de la fente 64 est rejointe, dans une position de départ où l'encoche 54 est en concordance avec la trajectoire du doigt d'accrochage 47. L'accouplement est alors réalisé et la position prise par les constituants du dispositif selon l'invention est celle montrée sur la figure 5D. Le couvercle de cuve peut alors être remis en place.

L'outillage spécial de manoeuvre du dispositif peut aussi être utilisé pour désaccoupler manuellement la tige de commande 5 de la grappe absorbante 6, en cas de disfonctionnement du système de déconnexion automatique, par exemple en cas d'une perte d'étanchéité du soufflet 35.

Le dispositif selon l'invention est donc conçu de telle sorte que, si l'étanchéité du soufflet 35 est rompue, la tringle de verrouillage 32 est amenée et/ou immobilisée en position basse. L'accouplement est donc maintenu lorsque le réacteur est refroidi. Cette disposition est obtenue grâce au premier ressort 40 exerçant une poussée permanente vers le bas sur la tringle de verrouillage 32 qui, en cas de perte de rigidité du module thermique, amène et/ou maintient cette tringle de verrouillage 32 en position basse.

Le désaccouplement manuel de secours s'effectue en remontant la tige de démontage 66 à l'aide de l'outil spécial, la tige de commande 5 étant maintenue fixe par ce même outil.

La montée de la tige de démontage 66 déplace la tringle de verrouillage 32, lorsqu'une certaine course est parcourue. Le renflement 67 terminant la tige de démontage 66 soulève tout d'abord la tête d'accrochage 37 en venant en prise avec son étrier 38, puis, si le soufflet 35 est crevé, le pion 42 de la tringle de verrouillage 32 vient buter au bas de la rainure 41 du tube 36 de la tête d'accrochage 37 qui soulève la tringle de verrouillage 32. Cette dernière est amenée jusqu'en position haute, l'extrémité inférieure de la rainure 63 qu'elle comporte venant buter sur le pion 61 traversant la gaine 28 de la tige de commande 5. La gorge 33 de la tringle de verrouillage 32 est alors présentée en face des billes 31, ce qui autorise le désaccouplement.

Enfin, à l'aide de l'outil, on laisse monter la tige de commande 5 qui s'élève, sous l'effet de la poussée du troisième ressort 58 jusqu'à ce qu'elle soit dégagée du pommeau 18 et on redescend la tige de démontage 66 en position de repos. La position prise par les constituants du dispositif et le pommeau 18 de la grappe absorbante 6 est la même qu'après une déconnexion automatique suivie d'une dépose de la tige sur le pommeau (figure 5C).

La neutralisation du désaccouplement automatique demande que la température soit abaissée en deça de la température de blocage de la tête d'accrochage 37 par une mise en butée du doigt d'accrochage 47, qu'elle porte contre l'épaulement 55 du cylindre interne 49. Il est nécessaire également que la grappe absorbante 6 soit amenée en position insérée dans l'assemblage combustible, son pommeau 18 reposant sur l'embout supérieur de l'assemblage.

Ces conditions étant remplies, la neutralisation s'effectue en exerçant une poussée sur la tige de commande 5 à l'aide de son mécanisme de déplacement, jusqu'à amener la surface conique 70 de celle-ci en butée sur le rétrécissement 71 du pommeau 18.

L'abaissement de la tige de commande 5 provoque, comme lors de l'opération de réaccouplement manuel à l'aide de l'outil 66 spécial de manoeuvre décrit plus haut, une rentrée complète du doigt d'accrochage 47 à l'intérieur de la tête d'accrochage 37, qui autorise une descente de la tête 37 à l'intérieur du cylindre 49 et s'accompagne d'un abaissement de la tringle de verrouillage 32 jusqu'en position basse. Dans ces conditions, une baisse de température ultérieure provoque une descente de la tête d'accrochage 37, la tringle de verrouillage 32 restant en position basse. Le désaccouplement automatique est donc neutralisé et les constituants internes du dispositif selon l'invention prennent, à température égale, la position indiquée sur la figure 5D.

Le désaccouplement automatique est à nouveau obtenu après une remontée en température suffisante pour amener le doigt d'accrochage 47 au-dessus de l'épaulement 55 du cylindre 49.

Enfin, si la température est amenée en deça de la température de désaccouplement sans neutralisation du désaccouplement automatique, il est possible de réaccoupler s'en devoir ouvrir le couvercle de cuve. Ce réaccouplement est effectué à l'aide du mécanisme de déplacement, le processus étant le même que lorsque cette opération est réalisée à l'aide de l'outil spécial de manoeuvre.

### Variante proposée

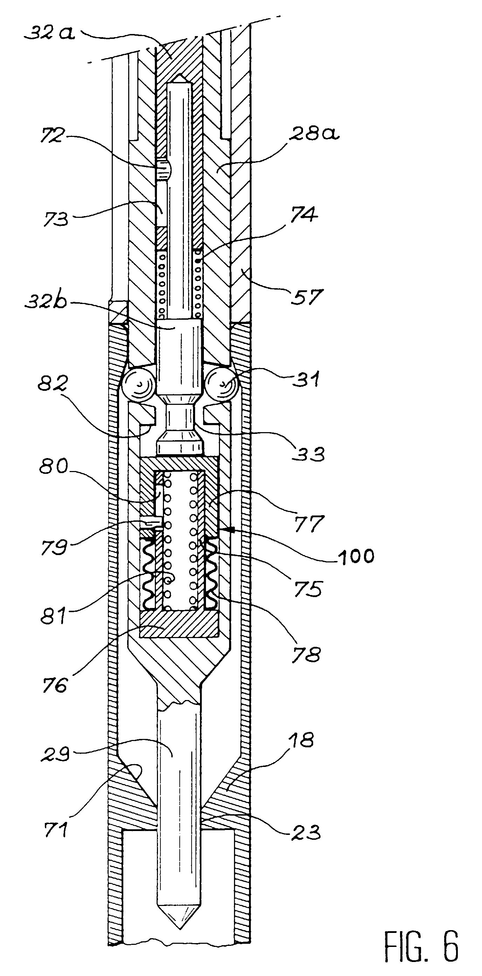

Un second mode d'exécution du dispositif selon l'invention est représenté sur la figure 6. Il ne diffère du premier que par l'utilisation d'une tringle de verrouillage réalisée en deux parties et d'un second module sensible à la pression.

En fait, la tringle de verrouillage 32 est ici constituée de deux tronçons superposés. Le tronçon supérieur 32a est relié au premier module thermique et la gorge de verrouillage 33 est usinée dans le bas du tronçon inférieur 32b. Ce dernier comporte en partie haute un rétrécissement engagé à l'intérieur d'un perçage réalisé à l'intérieur du tronçon supérieur 32a. Ces deux tronçons sont reliés entre eux, avec la possibilité d'un déplacement relatif en translation égal à la course de déverrouillage de la liaison à billes, au moyen d'un pion d'arrêt 72 fixé radialement au tronçon inférieur 32b et engagé dans une lumière axiale 73 ménagée dans le tronçon supérieur 32a. Un quatrième ressort 74 est monté sur le rétrécissement du tronçon inférieur 32b et tend à écarter les deux tronçons l'un par rapport à l'autre.

Un module barométrique 100 est placé à l'intérieur de la gaine 28a de la tige de commande, sous le tronçon inférieur 32b de la tringle de verrouillage. Ce module barométrique 100 est constitué d'une douille axiale 75 centrale et coaxiale à la tige de commande 5, fermée en partie inférieure par une embase 76 et engagée en partie supérieure dans une capsule 77. Un soufflet métallique 78 est monté sur la douille axiale 75 et relie de façon étanche l'embase 67 de la douille axiale 75 au bord de la capsule 77. Le vide est fait à l'intérieur du module barométrique 100. Un pion de guidage et d'arrêt 79 est fixé radialement à la capsule 77 et est engagé dans une fente axiale 80 usinée dans la douille axiale 75. Un cinquième ressort 81 est placé à l'intérieur de la douille axiale 75 et a tendance à soulever la capsule 77. La raideur de ce cinquième ressort 81 est supérieure à celle du quatrième ressort 74 et moindre de celle des premier et deuxième ressorts 40 et 44 de la figure 2.

Lorsque le réacteur est en pleine puissance, la température à l'intérieur de la cuve atteint plusieurs centaines de degrés et la pression dépasse les cents bars. La position prise par les constituants du dispositif selon le second mode d'exécution est celle de la figure 5. La pression s'exerçant sur le module barométrique 100 comprime le cinquième ressort 81 et maintient le module en position de raccourcissement maximal, le fond de la capsule 77 venant en appui sur l'extrémité supérieure du tube 75.

Le doigt d'accrochage 47 est en position de saillie à l'intérieur de l'espace interne de la tige de commande 5. Le deuxième ressort (non représenté sur cette figure 6 exerce une poussée vers le bas sur la tête d'accrochage qui est transmise par l'intermédiaire du dispositif thermique, à savoir le soufflet 35, au tronçon supérieur 32a de la tringle de verrouillage. Cette poussée comprime le quatrième ressort 74 jusqu'à amener l'extrémité supérieure du rétrécissement du tronçon inférieur 32b au fond d'un perçage du tronçon supérieur 32a. Le tronçon inférieur 32b présente une partie pleine en face des billes 31 qui maintient l'accouplement.

Si la température est abaissée en deça de cette température de mise en butée du doigt d'accrochage 47 contre l'épaulement 55 du cylindre, le tronçon supérieur 32a de la tringle de verrouillage est soulevé par le module thermique, alors que le tronçon inférieur 32b reste en appui sur la capsule 77 et est maintenu dans cette position par la poussée du quatrième ressort 74.

Le désaccouplement automatique est obtenu si la température de fonctionnement est suffisamment basse pour que le tronçon supérieur 32a de la tringle de verrouillage s'élève sur une hauteur égale à la course de dévérouillage et si la pression est suffisamment diminuée pour que la poussée exercée en permanence par le cinquième ressort 81 sur la capsule 77 devienne suffisante pour soulever cette capsule 77 et le tronçon inférieur 32b sur une hauteur égale à la course de déverrouillage. Ceci fait présenter la gorge de verrouillage 33 en face des billes 31.

A titre d'exemple, le déverrouillage peut ainsi être obtenu, lorsque la température est descendue jusqu'à 80°C et la pression a baissé jusqu'à une valeur de quelques bars. Lorsque la course de déverrouillage est parcourue, la capsule 77 vient en butée haute contre une surface 82 ménagée dans la gaine 28a de la tige de commande. Le module barométrique 100 est alors en position d'allongement maximal et un abaissement ultérieur de pression est sans effet sur la position de la tringle de verrouillage.

Enfin, si l'étanchéité du soufflet métallique 78 du module barométrique 100 est rompue, et si celle du soufflet 35 du module thermique est conservée, le désaccouplement est obtenu lorsque la température de désaccouplement est atteinte.

Si l'étanchéité du module thermique est rompue et si celle du module barométrique 100 est conservée ou bien si l'étanchéité de ces deux modules est perdue, le tronçon inférieur 32b de la tringle de verrouillage reste en position basse lorsque la température et la pression de désaccouplement sont atteintes et l'accouplement est maintenu.

L'outil 66 spécial de manoeuvre permet alors d'obtenir le désaccouplement, le processus étant similaire à celui décrit lors de la présentation du fonctionnement du premier mode d'exécution du dispositif selon l'invention. On peut soulever le tronçon inférieur 32b de la tringle de verrouillage 32 par l'intermédiaire du pion 72.

De même, les processus de neutralisation de désaccouplement automatique et de réaccouplement restent inchangés par rapport à ceux décrits lors de la présentation du fonctionnement du premier mode d'exécution du dispositif selon l'invention.

L'invention ne se limite pas aux modes d'exécution qui viennent d'être décrits et comporte plusieurs variantes.

Ainsi, on peut utiliser d'autres moyens d'accouplement de l'extrémité inférieure de la tige de commande au pommeau 18 de la grappe absorbante 6. On peut aussi utiliser d'autres moyens d'accrochage de l'organe de verrouillage à la tige de commande 5. Egalement, les moyens d'accrochage 47 peuvent être portés par la tige de commande et non pas par une seule pièce interne à cette tige.

Enfin, le dispositif selon l'invention s'applique, non seulement aux réacteurs nucléaires à eau sous pression, mais également dans le cas de tout autre type de réacteur où la commande est effectuée par des translations d'éléments absorbants dans le coeur et où cette commande est assurée par des mécanismes disposés à l'extérieur de la cuve et transmise aux éléments absorbants par l'intermédiaire d'un organe de transmission traversant la cuve.

De plus, on peut utiliser l'invention dans des installations nucléaires où il est prévu une cuve allongée avec un organe de transmission exceptionnellement long, par exemple, pour pouvoir installer à l'intérieur de cette cuve un échangeur de chaleur.

## Revendications

1. Dispositif de désaccouplement automatique entre le pommeau (18) d'un ensemble absorbant (6) destiné à être introduit entre les crayons d'un assemblage combustible (8) du coeur (7) d'un réacteur nucléaire à eau pressurisée et une tige de commande (5) transmettant à l'ensemble absorbant (6) des mouvements induits par un mécanisme de commande (4) logé dans une enceinte étanche placée au-dessus du couvercle de fermeture (2) de la cuve (1) du réacteur, ce dispositif de désaccouplement comprenant une tête d'accrochage (37), une tringle de verrouillage (32) mobile, apte à occuper un état verrouillé et un état déverrouillé, dont un déplacement axial entraîne un changement d'état, et un module thermique
caractérisé en ce que
- le module thermique se déformant axialement sous l'effet de la température, est disposé entre la tête d'accrochage (37) et la tringle de verrouillage (32) pour former un ensemble mobile dans le sens axial et comprend un soufflet (35) étanche rempli d'eau ;
- la tête d'accrochage (37) comprend au moins un doigt d'accrochage (47) radial, faisant saillie grâce à un petit ressort (48) et coulissant à l'intérieur d'un cylindre (49) emboîté dans la gaine (28) de la tige de commande (5), ce cylindre (49) présentant une partie interne et de haut en bas, un évasement (53) chanfreiné, ainsi qu'une rainure axiale (54) ayant une section en forme de U sur une partie de sa hauteur, pour recevoir le doigt d'accrochage (47), un deuxième ressort (44) placé au-dessus de la tête d'accrochage (37) et ayant tendance à pousser en permanence vers le bas pour que se produise le désaccouplement automatique de l'ensemble absorbant (6) en cas de baisse de la température de l'eau de la cuve (1) du réacteur en dessous d'une première température déterminée, le doigt d'accrochage (47) venant alors en butée dans la rainure axiale (54) et la tringle de verrouillage (32) remontant sous l'effet du raccourcissement du soufflet (35), suite à la contraction de l'eau jusqu'à la position haute qui permet l'effacement radial de billes (31) dans une gorge annulaire (30) de la tringle de verrouillage (32) ;
- il comprend un tube extracteur (57) monté coulissant sur l'extrémité inférieure de la gaine (28) et repoussé vers le bas par un troisième ressort (58) suffisamment raide pour soulever la tige de commande (5), le tube extracteur (57) présentant à sa partie supérieure une fente (64) ayant une partie axiale (64a) suivie d'une partie hélicoïdale (64b) et qui, en coulissant sur un pion de guidage (51) solidaire du cylindre (49) guide le déplacement du cylindre (49),
- le réaccouplement de la tige de commande (5) avec le pommeau (18) de l'ensemble absorbant (6) se produisant lorsqu'une poussée est exercée sur le haut de la tige de commande (5), cette dernière se déplaçant d'abord vers le bas d'une hauteur égale à la partie axiale (64a) de la fente (64) du tube extracteur (49), puis, sous l'action de la partie hélicoïdale (64b) de la fente (64) sur le pion de guidage (51) faisant tourner le cylindre (49) d'une fraction de tour dégageant le doigt d'accrochage (47) de la rainure en U (54), permettant ainsi un déplacement vers le bas de l'ensemble de la tête d'accrochage (37), du module thermique et de la tringle de verrouillage (32).

2. Dispositif selon la revendication 1, caractérisé en ce que la tringle de verrouillage (32) est une tringle cylindrique coulissante, montée coaxialement dans la gaine (28) de la tige de commande (5), cette tringle de verrouillage (32) comportant une gorge de verrouillage annulaire (33) apte à être située en face de billes (31) logées dans la gaine (28) de la tige de commande (5) lorsque la tringle de verrouillage (32) est dans une position haute, les billes (31) étant reçues dans des évidements radiaux (30) de forme tronconique, ménagés en bas de la gaine (28) dont l'épaisseur est inférieure au diamètre des billes (31), ces évidements radiaux (30) étant conformés pour empêcher un échappement des billes (31) radialement vers l'extérieur.

3. Dispositif de guidage selon la revendication 1, caractérisé en ce que la gaine (28) de la tige de commande (5) comporte au niveau du pion de guidage (51) une fente horizontale (52) autorisant la rotation d'une fraction de tour du cylindre (49) par rapport à la tige de commande (5) permettant ainsi le dégagement du doigts d'accrochage (47) de la rainure interne en U (54) et en conséquence le libre déplacement de la tête d'accrochage (37) vers le bas.

4. Dispositif selon la revendication 1, caractérisé en ce qu'il comprend un module barométrique (100) disposé en-dessous de l'extrémité inférieure de la tringle de verrouillage (32) qui est séparée en deux tronçons (32a, 32b) reliés entre eux par un quatrième ressort (74) dont le débattement est limité par un système de pion de guidage et d'arrêt (79) et d'une fente axiale (80), ce module barométrique (100) étant maintenu en dépression et se déformant axialement en fonction des variations de pression régnant dans la cuve (1) du réacteur en provoquant un changement d'état de la tringle de verrouillage (32).

5. Dispositif selon la revendication 4, caractérisé en ce que le module barométrique (100) est constitué de préférence d'une embase inférieure (76) surmontée d'un douille axiale (75), d'une capsule supérieure (77) coiffant la douille axiale (75), d'un soufflet métallique (78) reliant de façon étanche la douille (75) et la capsule (77) et d'un cinquième ressort (81) placé à l'intérieur de la douille (75).

## Patentansprüche

1. Vorrichtung zum selbsttätigen Entkoppeln zwischen der Manschette bzw. Trageinrichtung (18) einer Absorberanordnung (6), dazu bestimmt, zwischen die Brennelemente einer Brennstoffkassette (8) des Kerns (7) eines Druckwasserreaktors eingeführt zu werden, und einem Antriebstab (5), der auf die Absorberanordnung (6) Bewegungen überträgt, die durch einen Steuermechanismus (4) bewirkt werden, der sich in einem dichten Gehäuse befindet, das sich über dem Verschlußdeckel (2) des Reaktorbehälters (1) befindet, wobei diese Entkopplungsvorrichtung einen Aufhängkopf (37), eine bewegliche Verriegelungsstange (32), die einen verriegelten und einen entriegelten Zustand einnehmen kann und deren Axialverschiebung einen Zustandswechsel herbeiführt, und einen thermischen Modul umfasst,
**dadurch gekennzeichnet,**
- dass der thermische Modul, der sich unter der Einwirkung der Temperatur axial verformt, zwischen dem Aufhängkopf (37) und der Verriegelungsstange (32) angeordnet ist, um eine in Axialrichtung bewegliche Einheit zu bilden, und einen dichten, mit Wasser gefüllten Faltenbalg (35) umfasst;
- dass der Aufhängkopf (37) wenigstens einen radialen Aufhängstift (47) umfasst, der dank einer kleinen Feder (48) vorsteht und im Innern eines Zylinders (49) gleitet, der in der Hülse (28) des Antriebstabs (5) steckt, wobei dieser Zylinder (49) einen Innenteil und von oben nach unten eine abgefaste trichterförmige Erweiterung (53) sowie eine axiale Nut (54) aufweist, die über einen Teil ihrer Höhe einen U-förmigen Querschnitt hat, um den Aufhängstift (47) aufzunehmen, und eine zweite Feder (44), angeordnet über dem Aufhängkopf (37), die permanent nach unten drückt, damit die selbsttätige Entkopplung der Absorberanordnung (6) im Falle des Absinkens der Temperatur des Wasser im Reaktorbehälter (1) unter eine erste festgelegte Temperatur erfolgt, wobei der Aufhängfinger (47) dann in der Axialnut (54) zum Anschlag kommt und die Verriegelungsstange (32) unter der Wirkung der Verkürzung des Faltenbalgs (35) aufgrund der Kontraktion des Wassers sich in die obere Stellung verschiebt, die eine Versenkung von Kugeln (31) in einer Ringnut (30) der Verriegelungsstange (32) ermöglicht;
- dass sie ein Extraktionsrohr (57) umfasst, das gleitend auf das untere Ende der Hülse (28) montiert ist und durch eine dritte Feder (58) zurückgedrückt wird, die ausreichend steif ist, um den Antriebstab (5) anzuheben, wobei das Extraktionsrohr (57) an seinem Oberteil einen Schlitz (64) aufweist, der einen axialen Teil (64a) hat, gefolgt von einem spiralförmigen Teil (64b), und der, indem er auf einem fest mit dem Zylinder (49) verbundenen Führungsstift (51) gleitet, die Verschiebung des Zylinders (49) führt,
- dass das Wiederankoppeln des Antriebstabs (5) an die Manschette bzw. Trageinrichtung (18) der Absorberanordnung (6) dann erfolgt, wenn auf den Oberteil des Antriebstabs (5) eine Druckkraft ausgeübt wird, wobei dieser letztere sich zunächst über eine Höhe nach unten verschiebt, die gleich dem axialen Teil (64a) des Schlitzes (64) des Extraktionsrohrs (49) ist, und dann, unter der Einwirkung des spiralförmigen Teils (64b) des Schlitzes (64) auf den Führungsstift (51), den Zylinder (49) um den Bruchteil einer Umdrehung dreht, die den Aufhängfinger (47) aus der U-förmigen Nut (54) befreit und so eine Verschiebung des aus Aufhängkopf (37), thermischem Modul und Verriegelungsstange (32) bestehenden Ganzen nach unten ermöglicht.

2. Vorrichtung nach Anspruch 1, dadurch gekennzeichnet, daß die Verriegelungsstange (32) eine zylindrische Gleitstange ist, koaxial in die Hülse (28) des Antriebstabs (5) montiert, wobei diese Verriegelungsstange (32) eine ringförmige Verriegelungsnut (33) umfasst, die, wenn sich die Verriegelungsstange (32) in einer oberen Stellung befindet, Kugeln (31) gegenübersteht, die in der Hülse (28) des Antriebstabs (5) sitzen, wobei die Kugeln (31) in kegelstumpfförmigen radialen Aussparungen (30) sitzen, die unten in der Hülse (28) vorgesehen sind und deren Dicke kleiner ist als der Durchmesser der Kugeln (31), wobei diese radialen Aussparungen (30) so geformt sind, dass sie ein radiales Entweichen der Kugeln (31) nach außen verhindern.

3. Vorrichtung nach Anspruch 1, dadurch gekennzeichnet, dass die Hülse (28) des Antriebstabs (5) in Höhe des Führungsstifts (51) einen horizontalen Schlitz (52) umfasst, der die Drehung des Zylinders (49) in Bezug auf den Antriebstab (5) um den Bruchteil einer Umdrehung zuläßt und so die Freigabe des Aufhängstifts (47) aus der U-förmigen Innennut (54) ermöglicht und infolgedessen die freie Verschiebung des Aufhängkopfs (37) nach unten.

4. Vorrichtung nach Anspruch 1, dadurch gekennzeichnet, dass sie einen barometrischen Modul (100) umfasst, angeordnet unter dem unteren Ende der Verriegelungsstange (32), die in zwei Teilstücke (32a, 32b) geteilt ist, die durch eine vierte Feder (74) miteinander verbunden sind, deren Federungsweg durch ein System aus Führungs- und Stoppstift (79) und einem Axialschlitz (80) begrenzt wird, wobei dieser barometrische Modul (100) im Unterdruck gehalten wird und sich axial verformt in Abhängigkeit von der in dem Reaktorbehälter (1) herrschenden Druckschwankungen, indem er einen Zustandswechsel der Verriegelungsstange (32) verursacht.

5. Vorrichtung nach Anspruch 4, dadurch gekennzeichnet, dass der barometrische Modul (100) vorzugsweise einen unteren Sockel (76) und darauf eine Axialhülse (75), eine über die Axialhülse (75) gestülpte obere Kappe (77) und einen metallischen Faltenbalg (78), der auf dichte Weise die Hülse (75) und die Kapsel (77) verbindet, und eine fünfte Feder (81) umfasst, angeordnet im Innern der Hülse (75).

## Claims

1. Automatic uncoupling device between the pommel (18) of an absorber cluster (6) for introduction into the fuel elements (8) of the core (7) of a pressurized water nuclear reactor and a control rod (5) transmitting to the absorber cluster (6) movements induced by a control mechanism (4) located in a tight enclosure placed above the sealing cover (2) of the reactor vessel (1), said uncoupling device incorporating an attachment head (37), a mobile locking member (32), able to occupy a locked state and an unlocked state and whereof an axial displacement leads to a change of state, and a thermal module, characterized in that the thermal module deforms axially under the effect of the temperature and is placed between the attachment head (37) and the locking member (32) in order to form an assembly mobile in the axial direction and comprising a tight, water-filled bellows (35) and the attachment head (37) comprises at least one radial attachment finger (47) projecting by means of a small spring (48) and sliding within a cylinder (49) fitted in the sheath (28) of the control rod (5), said cylinder having an internal portion and from top to bottom a chamfered widening (53), as well as an axial notch (54) having a U-shaped section over part of its height, in order to receive the attachment finger (47), a second spring (44) placed above the attachment head (37) and tending to permanently push downwards so that the absorber cluster (6) is automatically uncoupled in the case of a reduction in the temperature of the water of the reactor vessel (1) below a first given temperature, the attachment finger (47) then abutting in the axial notch (54) and the locking member (32) rising under the effect of the shortening of the bellows (35), due to the contraction of the water to the upper position permitting the radial engagement of the balls (31) in an annular groove (30) of the locking member (32), the recoupling of the control rod (5) with the pommel (18) of the absorber cluster (6) taking place when a pressure is exerted on the top of the control rod (5), the latter firstly being downwardly displaced by a height equal to the axial portion (64a) of the slot (64) of the cylinder (49) and then, under the action of the helical portion (64b) of the slot (64) on the guide pin (51) rotating the cylinder (49) by a fraction of a turn freeing the attachment finger (47) from the U-shaped notch (54), thus permitting a downward displacement of the assembly of the attachment head (37) of the thermal module and the locking member (32).

2. Device according to claim 1, characterized in that the locking member (32) is a sliding, cylindrical member, fitted coaxially in the sheath (28) of the control rod (5), said locking member (32) having an annular locking groove (33) which can be located in front of the balls (31) placed in the sheath (28) of the control rod (5) when the locking member (32) is in an upper position, the balls (31) being received in radial, truncated cone-shaped recesses (30) in the bottom of the sheath (28), whose thickness is less than the diameter of the balls (31), said radial recesses (30) being shaped so as to prevent a radial, outwardly directed escape of the balls (31).

3. Device according to claim 1, characterized in that the sheath (28) of the control rod (5) has, level with the guide pin (51), a horizontal slot (52) authorizing the rotation by a fraction of a turn of the cylinder (49) with respect to the control rod (5), thus permitting the freeing of the attachment finger (47) from the U-shaped, inner notch (54) and consequently the free, downward displacement of the attachment head (37).

4. Device according to claim 1, characterized in that it comprises a barometric module (100) positioned below the lower end of the locking member (32) and which is subdivided into two sections (32a, 32b) interconnected by a fourth spring (74), whose displacement is limited by a guide and stop pin system (79) and an axial slot (80), said barometric module (100) being maintained under vacuum and axially deforming as a function of the pressure variations prevailing in the reactor vessel (1) bringing about a change of state of the locking member (32).

5. Device according to claim 4, characterized in that the barometric module (100) is preferably constituted by a lower base (76) surmounted by an axial bush (75), an upper cap (77) covering the axial bush (75), a metal bellows (78) tightly connecting the bush (75) and the cap (77) and a fifth spring (81) placed within the bush (75).
